# EUROPÄISCHE PATENTSCHRIFT

(11) **EP 1 630 439 B1**
(45) Veröffentlichungstag und Bekanntmachung des Hinweises auf die Patenterteilung: **03.10.2007**
(21) Anmeldenummer: 05018227.8
(22) Anmeldetag: 23.08.2005
(51) Int. Cl.: F16D 25/08

(54) **Vorrichtung zum wahlweisen Aus- bzw. Einrücken einer Reibkupplung für Kraftfahrzeuge**
Device for engaging and disengaging a friction clutch as desired
Dispositif d'actionnement pour embrayage à friction pour véhicule automobile

(30) Priorität: 28.08.2004 DE 102004041776
(43) Veröffentlichungstag der Anmeldung: 01.03.2006
(73) Patentinhaber: Haldex Brake Products GmbH, 69123 Heidelberg (DE)
(72) Erfinder: Heer, Siegfried, 69168 Wiesloch (DE)
(74) Vertreter: Rehberg Hüppe + Partner

(56) Entgegenhaltungen:
- DE-C1- 3 842 722
- FR-A- 2 604 228
- US-A- 5 806 648

## Beschreibung

Die Erfindung betrifft eine Vorrichtung zum wahlweisen Aus- bzw. Einrücken einer Reibkupplung für Kraftfahrzeuge, mit einem für den Durchtritt einer Welle durchbrochenen Gehäuse, in dem ein hydraulisch beaufschlagbarer Ringkolben mit einer ersten Wirkfläche gleitend und dichtend gelagert ist, der ein Ausrücklager der Reibkupplung betätigt.

### STAND DER TECHNIK

Eine Vorrichtung der eingangs beschriebenen Art ist aus der DE 102 22 730 A1 bekannt. Die Vorrichtung dient zum wahlweisen Aus- bzw. Einrücken einer Reibkupplung für Kraftfahrzeuge, wobei das Ausrücken der aktiven Betätigung zugeordnet ist. Das Betätigungsorgan wird manchmal auch als Zentralausrücker bezeichnet. Die Vorrichtung weist ein ortsfest anzuordnendes Gehäuse auf, in welchem ein Ringkolben verschiebbar und dichtend geführt ist, der hydraulisch beaufschlagbar ist. Die hydraulische Beaufschlagung wird beispielsweise durch einen Geberzylinder erzeugt, der mit dem Fuß betätigt wird. Die Bauart des Ringkolbens ist durch die Anwendung bedingt. Die Kupplung besitzt an dieser Stelle eine Welle, die die Vorrichtung durchsetzt und damit auch durch den Ringkolben hindurchreicht. Über den Ringkolben wird ein Ausrücklager der Reibkupplung betätigt. Dieses Ausrücklager ist nach Art eines Kugellagers ausgebildet, um die drehenden Elemente der Kupplung von den nicht drehenden Elementen der Vorrichtung und des Ringkolbens zu trennen. Zwischen dem Ringkolben und dem Ausrücklager sind mehrere Übertragungselemente vorgesehen. Die Vorrichtung weist auch eine Vorlastfeder auf, die die Aufgabe hat, die Anlage des Ringkolbens relativ zu dem Ausrücklager auch dann sicherzustellen, wenn keine hydraulische Beaufschlagung erfolgt.

Da der Ringkolben der bekannten Vorrichtung hydraulisch über den fußkraftbetätigten Geberzylinder beaufschlagt wird, sind die dabei aufbringbaren Kräfte und erzeugbaren Drücke in dem hydraulischen Übertragungsmedium begrenzt. Es sind relativ hohe Betätigungskräfte erforderlich, um die Kupplung auszurücken. In dem hydraulischen Betätigungsmedium werden Drücke in der Größenordnung von 50-60 bar erzeugt. Die Dichtungen der Vorrichtung werden notwendigerweise immer mit diesen hohen Drücken beaufschlagt, so dass die Lebensdauer der Vorrichtung begrenzt ist. Bei einem Defekt an den Dichtungen besteht die Gefahr des Lufteintritts in das System, mit allen denkbaren nachteiligen Folgen bei einer hydraulischen Betätigung.

Andererseits ist aus der DE 43 39 449 A1 ein Verstärker für hydraulische Steuerleitungen an Kraftfahrzeugen bekannt, der insbesondere in Verbindung mit einer Bremse oder auch einer Kupplung eingesetzt wird. Der Verstärker weist ein Gehäuse auf, welches einen Anschluss für eine hydraulische Steuerleitung besitzt, die an einen fußbetätigten Geberzylinder angeschlossen ist. In dem Gehäuse des Verstärkers ist ein Arbeitskolben gleitend und dichtend gelagert, dem ein kreisringförmiger Verstärkerkolben zugeordnet ist, der über eine pneumatische Druckluftquelle mit Hilfs- oder Servodruck zusätzlich beaufschlagt werden kann. Für die Steuerung des Hilfs- oder Servodrucks ist ein Steuerventil im Gehäuse des Verstärkers untergebracht. Das Steuerventil besitzt einen federnd aufgehängten Doppelventilkörper, der mit einem Steuerkolben zusammenarbeitet, der ebenfalls mit der hydraulischen Steuerleitung in Verbindung steht und über diese angesteuert werden kann. Damit wird der hydraulisch übertragenen Fußkraft eine Hilfs- oder Servokraft hinzugefügt. Beide Kräfte wirken über einen Arbeitskolben auf ein hydraulisches Medium, welches dann wiederum einem Nehmerzylinder zugeordnet bzw. an einen solchen angeschlossen ist.

Aus der DE 38 42 722 C1 ist eine weitere Vorrichtung zum wahlweisen Aus- bzw. Einrücken einer Reibkupplung für Kraftfahrzeuge bekannt. Die Kupplung weist ein durchbrochenes Gehäuse auf, durch die eine Welle hindurchführen kann. Die Vorrichtung weist einen hydraulisch über eine Steuerleitung beaufschlagten Ringkolben mit einer ersten Wirkfläche auf, der gleitend in dem Gehäuse gelagert ist und ein Ausrücklager der Reibkupplung betätigt. Der Ringkolben besitzt eine zweite Wirkfläche, die ebenfalls über den hydraulischen Druck einer Steuerleitung unter Zwischenschaltung eines Schaltventils beaufschlagbar ist, so dass die zweite Wirkfläche in dieser Schaltstellung die erste Wirkfläche lediglich vergrößert. Über das Schaltventil kann aber auch die hydraulische Steuerleitung zu der zweiten Wirkfläche abgesperrt und stattdessen mit einem Druckspeicher verbunden werden, in welchem ein in einer Rückführfeder herrschender Druck gespeichert wird, der in dieser Verbindungsstellung lediglich den Druck einer Tellerfeder ausgleicht. Die zweite Wirkfläche wird weder pneumatisch beaufschlagt, noch findet ein Hilfs- oder Servodruck Anwendung.

### AUFGABE DER ERFINDUNG

Der Erfindung liegt die Aufgabe zugrunde, eine Vorrichtung der eingangs beschriebenen Art zu schaffen, die bei einfachem Aufbau nur eine vergleichsweise niedrige Betätigungskraft erfordert.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Zwar ist es denkbar, den aus der DE-OS 43 39 449 A1 bekannten Verstärker der aus der DE 102 22 730 A1 bekannten Vorrichtung vorzuordnen. Dabei entsteht jedoch ein relativ komplizierter Aufbau mit einer Mehrzahl von Verbindungsleitungen und entsprechenden Leitungsanschlüssen. Gleichwohl werden die hydraulischen Dichtungen des Verstärkerkolbens des Verstärkers und des hydraulischen Nehmerzylinders in der Vorrichtung relativ hoch belastet, so dass die eingangs beschriebenen Nachteile nicht beseitigt werden.

Der Erfindung liegt der Gedanke zugrunde, die bekannte Vorrichtung und den ebenfalls bekannten Verstärker zu einer Einheit zu integrieren und dabei zusätzlich die einzelnen Elemente so auszubilden und anzupassen, dass sich nicht nur ein einfacher Aufbau unter Wegfall von Verbindungsleitungen ergibt, sondern auch eine vergleichsweise niedrige Betätigungskraft ausreicht, um eine Reibkupplung ordnungsgemäß und mit vergleichsweise großer Lebensdauer betätigen zu können. Dabei wird der in einer solchen Kupplung auftretende Verschleiß und auch der erforderliche Bewegungsweg berücksichtigt bzw. überbrückt. Bei der Integration der beiden Vorrichtungen entsteht eine neue Einheit, die eine vergleichsweise niedrigere Anzahl von Einzelelementen umfasst. So übernimmt der Ringkolben der Vorrichtung auch die Funktion des Verstärkerkolbens des Verstärkers. Weiter kommt ein hydraulischer Arbeitsraum des Verstärkers auf der Ausgangsseite sowie die hydraulische Übertragung der verstärkten Kraft in Fortfall, weil die sich addierenden Kräfte ausgangsseitig von dem Ringkolben direkt mechanisch auf das Ausrücklager übertragen werden. Damit entfallen auch solche Dichtungen, die im Stand der Technik relativ hoch belastet sind und die Ursache für eine niedrige Lebensdauer darstellen. Die verbleibenden Dichtungen sind vergleichsweise niedriger belastet, so dass die Lebensdauer erhöht ist. Auch die Betriebssicherheit ist damit verbessert. Die neue Vorrichtung gestattet auch eine Notbetätigung für den Fall, dass der pneumatische Hilfs- oder Servodruck nicht zur Verfügung steht bzw. ausfällt. In diesem Falle muss zwar eine erhöhte Fußkraft angewendet werden. Eine Betätigung, d. h. ein Ausrücken der Reibkupplung ist aber dennoch möglich.

Die erste Wirkfläche an dem Ringkolben ist als Kreisringfläche ausgebildet und wird nur von dem hydraulisch von einem Geberzylinder übertragenen Druck entsprechend der ausgeübten Fußkraft beaufschlagt. Die Belastung der zugehörigen Dichtung ist reduziert, weil eine kleinere Fußkraft für die Betätigung ausreicht. Auch die zweite Wirkfläche ist als Kreisringfläche ausgebildet. Die zugehörigen Dichtungen werden nur von dem Servodruck der pneumatischen Verstärkung, nicht aber von einem Druck resultierend aus der Summe der hydraulischen und pneumatischen Kräfte belastet. Die beiden Wirkflächen können an einem gemeinsamen Ringkolben verwirklicht sein. Es ist aber auch möglich, zusätzlich zum Ringkolben mit der ersten Wirkfläche einen gesonderten Ringkolben vorzusehen, der dann die zweite Wirkfläche trägt. Auch bei dieser Unterteilung des Ringkolbens in zwei konstruktive Einheiten wirken beide Einheiten direkt mechanisch auf das Ausrücklager ein. Die Addition der Kräfte erfolgt damit im mechanischen Teil der Vorrichtung.

Das Gehäuse weist zweckmäßig einen zylindrischen Ringfortsatz auf, der die beiden Wirkflächen an dem oder den Ringkolben voneinander trennt. Der Ringfortsatz stellt einen entsprechenden Hub zur Verfügung, der es erlaubt, die erforderlichen Betätigungswege und den auftretenden Verschleiß in der Reibkupplung zu überbrücken. Der Ringfortsatz bildet gleichzeitig zwei Laufflächen für Dichtungen oder ermöglicht die Unterbringung einer Dichtung, die den pneumatischen Verstärkungsteil von dem hydraulischen Betätigungsteil trennt.

Der Ringkolben kann eine sich axial erstreckende Ausnehmung aufweisen, in der eine Vorlastfeder angeordnet ist. In der Regel genügt eine einzige Vorlastfeder. Es können aber auch mehrere Vorlastfedern vorgesehen sein.

Die erste, hydraulisch beaufschlagbare Wirkfläche ist auf kleinerem Radius als die zweite, pneumatisch beaufschlagbare Wirkfläche angeordnet. Dies vereinfacht es, die zweite Wirkfläche konstruktiv groß zu gestalten. Grundsätzlich ist aber auch die umgekehrte Anordnung möglich.

Das Steuerventil kann einen federnd aufgehängten Doppelventilkörper und einen gestuften Steuerkolben aufweisen. Der Doppelventilkörper kann hohl ausgebildet sein. In diesem Falle ergibt sich eine einfache Möglichkeit, der Entlüftung des Verstärkerraums an der zweiten Wirkfläche durch den Doppelventilkörper hindurch. Der Doppelventilkörper kann aber auch als geschlossene Ventilplatte ausgebildet sein. In diesem Falle wird der Verstärkungsraum durch den ohnehin hohlen Fortsatz des Steuerkolbens entlüftet. An dem gestuften Steuerkolben sind zweckmäßig zwei Dichtungen gegen pneumatischen Druck vorgesehen, um die pneumatische Seite gegenüber der hydraulischen Betätigung mit erhöhter Sicherheit abzusperren.

Der Steuerkolben kann zur Änderung des Übersetzungsverhältnisses mehrere auf unterschiedlichen Durchmessern angeordnete Nuten für die wahlweise Anordnung von Dichtungen aufweisen. Damit ist eine einfache Anpassung an bauliche Gegebenheiten möglich.

Der Steuerkolben kann zur Betätigung des Doppelventilkörpers einen hohlen Fortsatz aufweisen, der der Entlüftung dient.

Der Ringkolben oder der gesonderte Ringkolben kann auch über eine randseitig im Gehäuse eingespannte Membran dichtend geführt sein. Diese Möglichkeit ist unabhängig davon, ob ein gemeinsamer Ringkolben vorgesehen ist oder ein Ringkolben und eine gesonderter zusätzlicher Ringkolben.

Das Ausrücklager sollte unmittelbar auf dem Ringkolben abgestützt sein. Dies ergibt die Addition der Kräfte im mechanischen Teil. Außerdem resultiert hieraus eine kurze Baulänge.

Natürlich schadet eine Zwischenschaltung von Beilagescheiben nicht. Eine hydraulische Übertragungsstrecke mit all ihren Nachteilen wird aber auf jeden Fall vermieden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen Schnitt durch eine erste Ausführungsform der Vorrichtung,
- **Fig. 2**: zeigt einen Schnitte durch eine zweite Ausführungsform der Vorrichtung,
- **Fig. 3**: zeigt einen Schnitt durch eine dritte Ausführungsform der Vorrichtung,
- **Fig. 4**: zeigt einen Schnitt durch eine vierte Ausführungsform der Vorrichtung,
- **Fig. 5**: zeigt einen Schnitt durch eine fünfte Ausführungsform der Vorrichtung, und
- **Fig. 6**: zeigt einen Schnitt durch eine sechste Ausführungsform der Vorrichtung.

### FIGURENBESCHREIBUNG

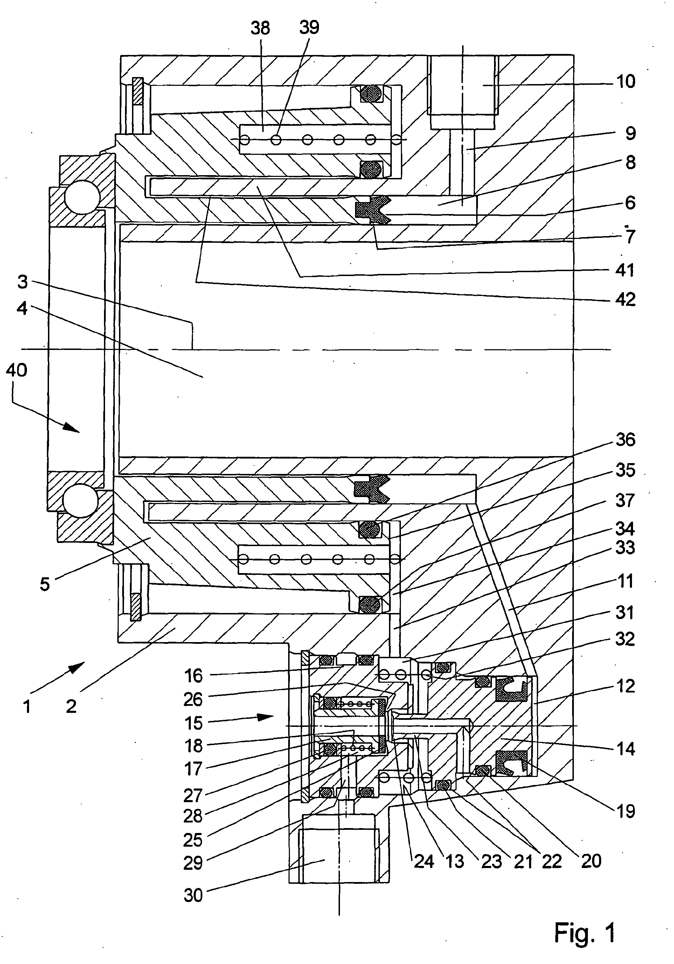

Die in **Fig. 1** dargestellte Vorrichtung 1 weist ein Gehäuse 2 auf, welches koaxial zu einer Längsachse 3 eine Ausnehmung 4 besitzt, durch die bauartbedingt eine Welle einer Kupplung (nicht dargestellt) hindurchragt oder jedenfalls hindurchragen kann.

In dem Gehäuse 2 ist ein Ringkolben 5 gleitend und dichtend gelagert. Der Ringkolben 5 weist eine erste Wirkfläche 6 auf, die als Kreisringfläche ausgebildet ist und von einer Lippendichtung 7 abgedichtet bzw. bestimmt wird. Es versteht sich, dass auch andere Dichtungskonstruktionen vorgesehen sein könnten, mit denen die Wirkfläche 6 gebildet wird. Die erste Wirkfläche 6 schließt einen Betätigungsraum 8 ab, zu dem eine hydraulische Betätigungsleitung 9 über einen Anschluss 10 herangeführt ist. Am Anschluss 10 ist eine nicht dargestellte hydraulische Übertragungsleitung angeschlossen, die von einem Geberzylinder ausgeht, der beispielsweise fußbetätigt ist, um letztlich bei Betätigung die Reibkupplung auszurücken.

Von dem Betätigungsraum 8 führt eine Steuerleitung 11 zu einer Steuerkammer 12. Die Steuerkammer 12 ist Bestandteil einer mehrfach gestuften Bohrung 13 im Gehäuse 2, die zur Unterbringung eines Steuerkolbens 14 eines Steuerventils 15 dient. Zu dem Steuerventil 15 gehört weiterhin ein Gehäuse fest angeordneter und abgedichteter Einsatzkörper 16, in dem ein Doppelventilkörper 17 auf einer Feder 18 aufgehängt abgestützt ist.

Der Steuerkolben 14 ist gestuft ausgebildet und weist eine hydraulische Dichtung 19 auf, die die Steuerkammer 12 begrenzt. Auf gleichem Durchmesser befindet sich eine pneumatische Dichtung 20. Auf vergleichsweise größerem Durchmesser ist eine pneumatische Dichtung 21 vorgesehen. Die Dichtungen 20 und 21 sind in entsprechenden Nuten 22 im Steuerkolben 14 untergebracht. Weiterhin weist der Steuerkolben 14 einen hohlen Fortsatz 23 auf, der zur Betätigung des Doppelventilkörpers 17 ausgestaltet ist. Der Fortsatz 23 weist einen vorstehenden Rand 24 auf. Der Doppelventilkörper 17 trägt eine Ventilplatte 25 aus elastischem Material. Der Rand 24 bildet mit der Ventilplatte 25 ein Auslassventil 24, 25. Der Einsatzkörper 16 weist einen vorspringen Rand 26 auf, der zusammen mit der Ventilplatte 25 ein Einlassventil 25, 26 bildet. Weiter besitzt der Doppelventilkörper 17 eine Dichtung 27, die zusammen mit dem Einlassventil 25, 26 einen Vorratsraum 28 begrenzt, indem die Feder 18 untergebracht ist. Der Vorratsraum 28 steht über eine Leitung 29 und einen Anschluss 30 sowie eine nicht dargestellt dort angeschlossene Leitung mit einem Vorratsbehälter für Druckluft (nicht dargestellt) in ständiger Verbindung. Diese Druckluft wird als Servokraft genutzt.

Zwischen dem gestuften Steuerkolben 14 und dem Einsatzkörper 16 befindet sich eine Einströmkammer 31, in der eine Rückführfeder 32 für den Steuerkolben 14 untergebracht ist. Die Einströmkammer 31 ist über eine pneumatische Leitung 33 ständig mit einem Verstärkungsraum 34 verbunden.

Der gemeinsame Ringkolben 5 weist eine zweite Wirkfläche 35 auf, deren Größe durch zwei Dichtungen 36 und 37 bestimmt wird. Die Wirkfläche 35 ist ebenso wie die erste Wirkfläche 6 als Kreisringfläche ausgebildet, jedoch vorzugsweise außen angeordnet, so dass sich konstruktiv einfach eine relativ große zweite Wirkfläche 35 ausbilden lässt, die letztlich die Verstärkung bestimmt. Es versteht sich, dass die zweite Wirkfläche 35 pneumatisch beaufschlagt wird.

Der gemeinsame Ringkolben 5 mit den beiden Wirkflächen 6 und 35 weist eine sich axial erstreckende Ausnehmung 38 auf, in der eine Vorlastfeder 29 untergebracht ist, die sich einerseits am Ringkolben 5 und andererseits am Gehäuse 2 abstützt. Es ist erkennbar, dass der Ringkolben 5 unmittelbar auf ein als Kugellager ausgebildetes Ausrücklager 40 der Reibkupplung einwirkt. Auf diese Weise werden die sich drehenden Elemente der Reibkupplung von den sich nicht drehenden Elementen, insbesondere dem Ringkolben 5 getrennt. Durch diese konstruktive Ausbildung und Anordnung des Ringkolbens 5 relativ zum Ausrücklager 40 addieren sich die über die erste Wirkfläche 6 hydraulisch aufgebrachte Kraft und die über die Wirkfläche 35 im Betätigungsfall aufgebrachte pneumatische Zusatzkraft im mechanischen Teil. Damit wird vorteilhaft auf die Weiterleitung eines hydraulischen Druckes, der der Addition der Kräfte entspricht, verzichtet.

Das Gehäuse 2 weißt einen Ringfortsatz 41 auf, der axial in eine entsprechende und relativ lang gestaltete Ringnut 42 im gemeinsamen Ringkolben 5 einragt. Diese Gestaltung zielt auf die Bereitstellung eines relativ großen Hubes ab, der erforderlich ist, um einmal das zum Ein- und Ausrücken der Kupplung erforderliche Spiel und zum anderen den an der Reibkupplung entstehenden Verschleiß zu überbrücken. Der Ringfortsatz 41 bildet weiterhin Laufflächen für die Lippendichtung 7 und die Dichtung 36.

Zur Betätigung der Reibkupplung, also zum Ausrücken, wird auf hydraulischem Wege über einen fußbetätigten Geberzylinder letztlich ein hydraulischer Druck in den Betätigungsraum 8 geleitet. Der Ringkolben 5 liegt in Folge der Einwirkung der Vorlastfeder 39 ohnehin an dem Ausrücklager 20 an. Im Betätigungsraum 8 und damit auf die erste Wirkfläche 6 des Ringkolbens 5 einwirkend ergibt sich aus dem hydraulischen Druck eine entsprechende Betätigungskraft. Gleichzeitig gelangt hydraulisch übertragener Druck über die Steuerleitung 11 auch in die Steuerkammer 12, so dass der Steuerkolben 14 so verschoben wird, dass zunächst das Auslassventil 24, 25 schließt und in der Folge das Einlassventil 25, 26 öffnet. Der im Vorratsraum 28 anstehende pneumatische Hilfsdruck gelangt damit über das geöffnete Einlassventil 25, 26 in die Einströmkammer 31 und von dort über die Leitung 33 in den Verstärkungsraum 34, so dass damit die zweite Wirkfläche 35 beaufschlagt wird. In der Folge wird die Kupplung ausgerückt und der dazu erforderliche Hub zurückgelegt. Durch die

Durchmesserdifferenz zwischen den Dichtungen 21 und 19 am Steuerkolben 14 ist ein Übersetzungsverhältnis zwischen dem hydraulischen Betätigungsdruck und dem pneumatischen Servodruck festgelegt. Entsprechend erfolgt eine Auswiegung am Steuerkolben 14, in den auch die Vorspannkraft der Rückführfeder 32 eingeht. Es stellt sich dann eine Abschlussstellung am Steuerventil 15 ein, bei dem sowohl das Einlassventil 25, 26 wie auch das Auslassventil 24, 25 geschlossen sind.

Die Betätigungskraft in Folge des hydraulischen Betätigungsdruckes auf der Wirkfläche 6 und die Verstärkungskraft aufgrund des pneumatischen Servodruckes auf der zweiten Wirkfläche 35 addieren sich im gemeinsamen Ringkolben, so dass mit dieser mechanisch agierenden Gesamtkraft das Ausrücklager 40 entsprechend beaufschlagt wird.

Zur Beendigung des Auskuppelvorgangs und damit zum Einrücken der Reibkupplung wird die hydraulische Betätigungskraft weggenommen, so dass die erste Wirkfläche 6 entsprechend entlastet wird. Gleichzeitig damit wird auch der Steuerkolben 14 in der Steuerkammer 12 entlastet, so dass die in der Einströmkammer 31 wirksame Druckkraft den Steuerkolben 14 in seine Ausgangslage zurückschiebt. Damit entfernt sich auch der hohle Fortsatz 23 von der Ventilplatte 25 und das Auslassventil 24, 25 wird geöffnet. Durch den hohlen Doppelventilkörper 17 wird damit der Verstärkungsraum 34 an die Atmosphäre angeschlossen, also entlüftet. Gleichzeitig erfolgt durch den hohlen Fortsatz 23 und eine zwischen den Dichtungen 20 und 21 endende Verbindungsleitung auch eine Entlüftung dieses eingeschlossenen Raumes zwischen den Dichtungen 20 und 21.

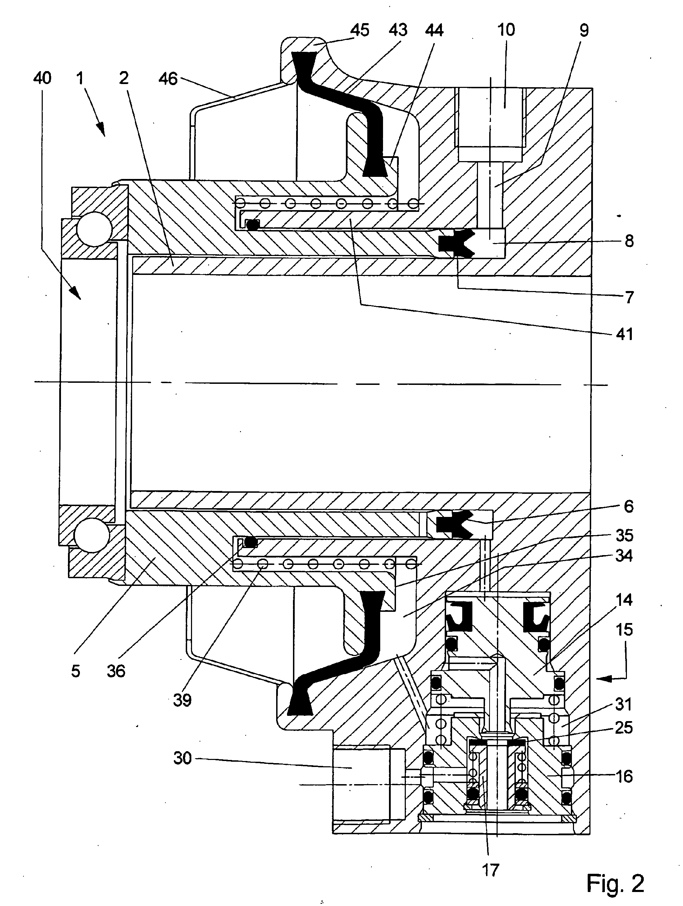

In Fig. 2 ist eine zweite Ausführungsform der Vorrichtung 1 dargestellt. Diese Ausführungsform ist in weiten Bereichen ähnlich ausgebildet wie die Ausführungsform der Fig. 1, so dass hierauf verwiesen werden kann. Der gemeinsame Ringkolben 5 besitzt auch hier die beiden Wirkflächen 6 und 35. Die eine Dichtung 36, die den Verstärkungsraum 34 abdichtet, ist hier innen an dem Ringfortsatz 41 angeordnet.

Der gemeinsame Ringkolben 5 ist außen mit Hilfe einer Membran 43 abgedichtet, die einerseits in einem Rand 44 am Ringkolben 5 und andererseits an einem Rand 45 des Gehäuses 2 dichtend eingespannt ist. Ein Gehäusedeckel 46 dient der geschützten Bewegung der Membran 43 bei Einleitung des Servodruckes in den Verstärkungsraum 34.

Das Steuerventil 15 ist hier grundsätzlich übereinstimmend zu der Ausführungsform der Fig. 1 ausgebildet. Es ist lediglich mit seiner Achse um 90° gedreht im Gehäuse 2 untergebracht.

Die Funktion und Arbeitsweise der Vorrichtung gemäß Fig. 2 verläuft analog der Funktion und Arbeitsweise der Vorrichtung gemäß Fig. 1.

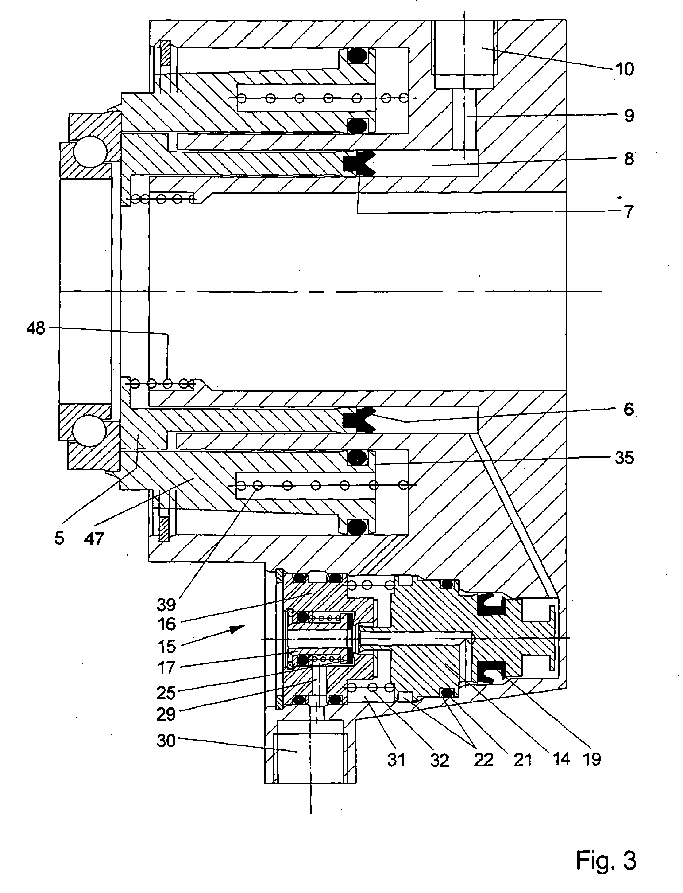

Die in Fig. 3 dargestellte weitere Ausführungsform der Vorrichtung 1 weist die Besonderheit auf, dass der Ringkolben 5 geteilt ausgebildet ist bzw. dem innen angeordneten Ringkolben 5 ein gesonderter Ringkolben 47 zugeordnet ist. Der Ringkolben 5 trägt die erste Wirkfläche 6. Der gesonderte Ringkolben 47 trägt die zweite Wirkfläche 35. Die Vorlastfeder 39 wirkt auf den gesonderten Ringkolben 47. Für den Ringkolben 5 ist eine gesonderte Vorlastfeder 48 vorgesehen. Der Steuerkolben 14 des Steuerventils 15 ist hier etwas anders gestaltet. Die Nuten 22 dienen dem wahlweisen Einsetzen der Dichtung 21 zur Veränderung des Übersetzungsverhältnisses in Anpassung an die speziellen Gegebenheiten eines Fahrzeuges. Gleiches gilt auch für die hydraulische Seite. Es sind hier zwei wahlweise nutzbare Nuten für die Dichtung 19 vorgesehen. Der hohle Fortsatz 23 endet hier zwischen den Dichtungen 19 und 21, also unmittelbar zwischen der pneumatischen und der hydraulischen Seite.

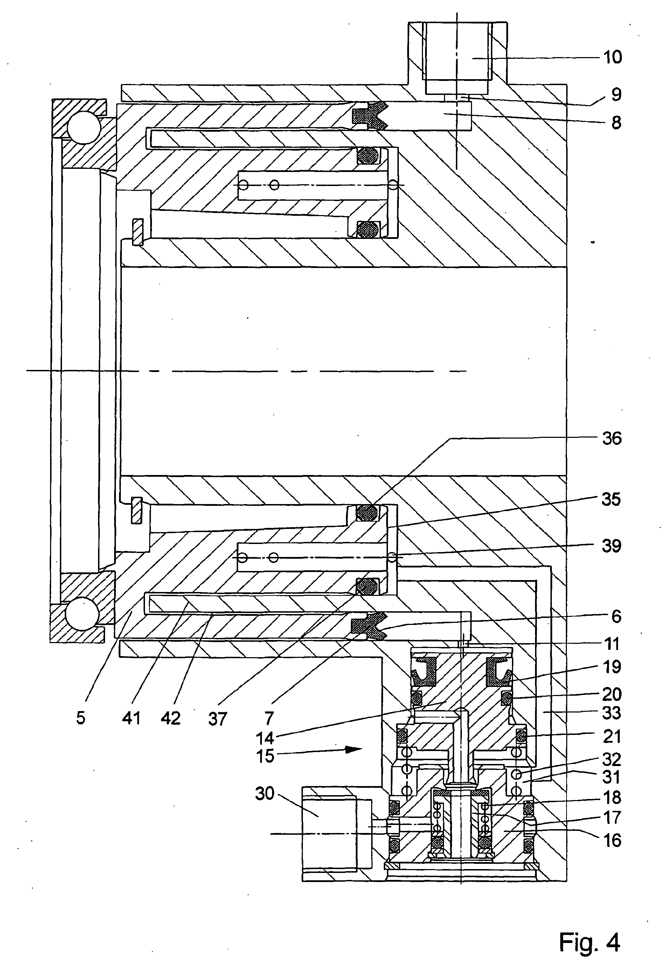

Fig. 4 verdeutlicht eine Konstruktion, bei der ein gemeinsamer Ringkolben 5 vorgesehen ist. Im Unterschied zur Ausführungsform der Fig. 1 ist hier die erste Wirkfläche 6 auf größerem Radius zu der Längsachse 3 vorgesehen als die zweite Wirkfläche 35. Damit wird verdeutlicht, dass die Anordnung der beiden Wirkflächen 6 und 35 auch umgekehrt verwirklicht sein kann. Das Steuerventil 15 ist so ausgebildet und angeordnet, wie dies bereits Fig. 2 zeigt.

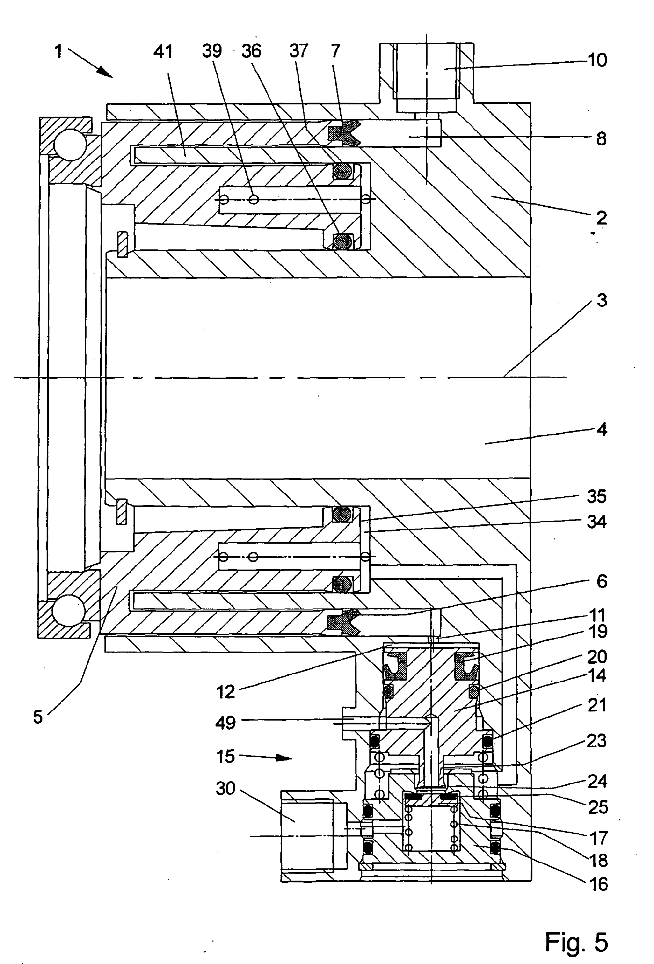

Die Ausführungsform der Fig. 5 stimmt in weiten Teilen mit der Ausführungsform gemäß Fig. 4 überein. Der Doppelventilkörper 17 ist hier lediglich als durchgehende Ventilplatte ausgebildet. Die Entlüftung des Verstärkungsraumes 34 erfolgt hier bei geöffnetem Auslassventil 24, 25 über eine gehäuseseitig vorgesehene Entlüftungsöffnung 49 durch den hohlen Fortsatz 23 hindurch und damit zwischen den Dichtungen 20 und 21.

Es versteht sich, dass bei allen Ausführungsformen eine Notbetätigung möglich ist, wenn die pneumatische Hilfskraft ausgefallen ist. In diesem Falle kann das Ausrücken der Reibkupplung nur auf hydraulischem Wege erfolgen, d. h. der Ausrückvorgang erfordert eine erhöhte Fußkraft, die allein über die erste Wirkfläche 6 einwirkt.

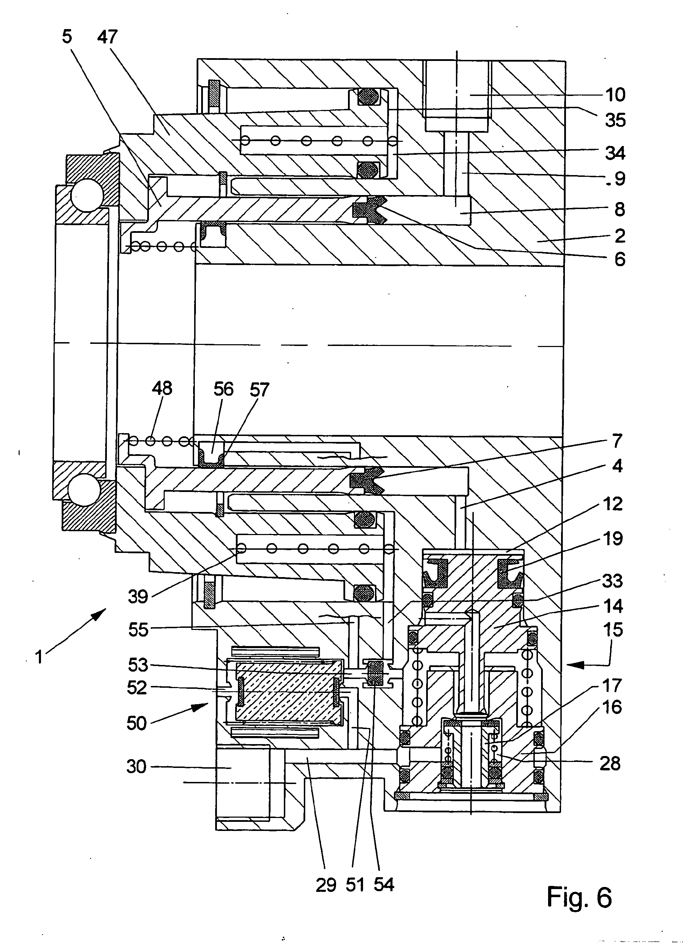

Die in Fig. 6 dargestellte Ausführungsform der Vorrichtung 1 baut auf einer zweiteiligen Kolbenkonstruktion mit einem Ringkolben 5 und einem gesonderten Ringkolben 47 auf. Der gesonderte Ringkolben 47 trägt die zweite Wirkfläche 35 im Anschluss an den Verstärkungsraum 34. Parallel zu dem Steuerventil 15 ist ein Magnetventil 50 vorgesehen. Von der Leitung 29, die zum Vorratsraum 28 führt, zweigt eine Leitung 51 ab, die vor dem Einlasssitz des Magnetventils 50 endet. Das Magnetventil 50 weist eine eigene Entlüftungsöffnung 52 auf. Vom Magnetventil 50 führt eine Leitung 53 zu einem Wechselventil 54 und eine Leitung 55 zu einer Blockierkammer 56. Die Blockierkammer 56 ist mit einer Bremslippe 57 versehen, mit der der Ringkolben 5 dann festgehalten wird, wenn über das Magnetventil 50 willkürlich die Reibkupplung ausgekuppelt werden soll. Das Wechselventil 54 mit seinem fliegend gelagerten Ventilkörper gestattet entweder die Ansteuerung des Verstärkungsraums 34 in Folge hydraulischer Betätigung durch Einleitung hydraulischen Druckes am Anschluss 10 oder willkürlich in Folge eines elektrischen Signals auf das Magnetventil 50. Bei dieser elektrischen Betätigung fehlt zwar die vom hydraulischen Druck auf den Kolben 5 bereitgestellte Kraft. Über die Leitung 55 wird die Blockierkammer 56 der Ringkolben 5 festgehalten, so dass auf den gesonderten Ringkolben 5 somit nur noch der volle Vorratsdruck einwirkt, der so zum Ausrücken der Reibkupplung genutzt wird.

### BEZUGSZEICHENLISTE

- 1: Vorrichtung
- 2: Gehäuse
- 3: Längsachse
- 4: Ausnehmung
- 5: Ringkolben
- 6: Wirkfläche
- 7: Lippendichtung
- 8: Betätigungsraum
- 9: Betätigungsleitung
- 10: Anschluss

- 11: Steuerleitung
- 12: Steuerkammer
- 13: Bohrung
- 14: Steuerkolben
- 15: Steuerventil
- 16: Einsatzkörper
- 17: Doppelventilkörper
- 18: Feder
- 19: Dichtung
- 20: Dichtung

- 21: Dichtung
- 22: Nut
- 23: Fortsatz
- 24: Rand
- 25: Ventilplatte
- 26: Rand
- 27: Dichtung
- 28: Vorratsraum
- 29: Leitung
- 30: Anschluss

- 31: Einströmkammer
- 32: Rückführfeder
- 33: Leitung
- 34: Verstärkungsraum
- 35: Wirkfläche
- 36: Dichtung
- 37: Dichtung
- 38: Ausnehmung
- 39: Vorlastfeder
- 40: Ausrücklager

- 41: Ringfortsatz
- 42: Ringnut
- 43: Membran
- 44: Rand
- 45: Rand
- 46: Gehäusedeckel
- 47: Ringkolben
- 48: Vorlastfeder
- 49: Entlüftungsöffnung
- 50: Magnetventil

- 51: Leitung
- 52: Entlüftungsöffnung
- 53: Leitung
- 54: Wechselventil
- 55: Leitung
- 56: Blockierkammer
- 57: Bremslippe

## Patentansprüche

1. Vorrichtung zum wahlweisen Aus- bzw. Einrücken einer Reibkupplung für Kraftfahrzeuge, mit einem für den Durchtritt einer Welle durchbrochenen Gehäuse (2), in dem ein hydraulisch beaufschlagbarer Ringkolben (5) mit einer ersten Wirkfläche (6) gleitend und dichtend gelagert ist, der ein Ausrücklager (40) der Reibkupplung betätigt, wobei am Ringkolben (5) oder an einem gesonderten Ringkolben (47) eine zweite Wirkfläche (35) vorgesehen ist, die mit einem pneumatischen Hilfs- oder Servodruck beaufschlagbar ist und im Gehäuse (2) der Vorrichtung (1) ein Steuerventil (15) für die Beaufschlagung der zweiten Wirkfläche (35) mit dem Hilfs- oder Servodruck angeordnet ist, welches über eine Steuerleitung (11) mit der ersten Wirkfläche (6) des hydraulisch beaufschlagten Ringkolbens (5) verbunden ist.

2. Vorrichtung nach Anspruch 1, **dadurch gekennzeichnet, dass** auch die zweite Wirkfläche (35) als Kreisringfläche ausgebildet ist.

3. Vorrichtung nach Anspruch 1 und 2, **dadurch gekennzeichnet, dass** das Gehäuse (2) einen zylindrischen Ringfortsatz (41) aufweist, der die beiden Wirkflächen (6, 35) an dem oder den Ringkolben (5; 47) voneinander trennt.

4. Vorrichtung nach mindestens einem der Ansprüche 1 bis 3, **dadurch gekennzeichnet, dass** der Ringkolben (5) eine sich axial erstreckende Ausnehmung (38) aufweist, in der eine Vorlastfeder (39) angeordnet ist.

5. Vorrichtung nach mindestens einem der Ansprüche 1 bis 4, **dadurch gekennzeichnet, dass** die erste, hydraulisch beaufschlagbare Wirkfläche (6) auf kleinerem Radius als die zweite, pneumatisch beaufschlagbare Wirkfläche (35) angeordnet ist.

6. Vorrichtung nach mindestens einem der Ansprüche 1 bis 5, **dadurch gekennzeichnet, dass** das Steuerventil (15) einen federnd aufgehängten Doppelventilkörper (17) und einen gestuften Steuerkolben (14) aufweist.

7. Vorrichtung nach Anspruch 6, **dadurch gekennzeichnet, dass** der Steuerkolben (14) zur Änderung des Übersetzungsverhältnisses mehrere auf unterschiedlichen Durchmessern angeordnete Nuten (22) für die wahlweise Anordnung von Dichtungen (19; 21) aufweist.

8. Vorrichtung nach Anspruch 6 oder 7, **dadurch gekennzeichnet, dass** der Steuerkolben (14) zur Betätigung des Doppelventilkörpers (17) einen hohlen Fortsatz (23) aufweist.

9. Vorrichtung nach mindestens einem der Ansprüche 1 bis 8, **dadurch gekennzeichnet, dass** der Ringkolben (5) oder der gesonderte Ringkolben (47) über eine randseitig im Gehäuse (2) eingespannte Membran (43) dichtend geführt ist.

10. Vorrichtung nach mindestens einem der Ansprüche 1 bis 9, **dadurch gekennzeichnet, dass** das Ausrücklager (40) unmittelbar auf dem Ringkolben (5; 47) abgestützt ist.

## Claims

1. Device for engaging and disengaging a friction clutch as desired on vehicles, including a housing (2) having an opening for the extension of a shaft, in which a hydraulically operated annular piston (5) having a first surface (6) is glidable and sealingly provided, the piston (5) operating a bearing (40) for disengagement of the friction clutch, the piston (5) or an additional annular piston (47) having a second surface (35), the second surface (35) being operated by a pneumatic additional or power-assisted pressure, and the device including a control valve (15) positioned in the housing (2) of the device (1) for admitting the second surface (35) with the pneumatic additional or power-assisted pressure, the control valve (15) being connected to the first surface (6) of the hydraulically operated annular piston (5) by a control conduit (11).

2. Device of claim 1, **characterized in that** the second surface (35) is designed to be an annular surface also.

3. Device of claim 1 and 2, **characterized in that** the housing (2) includes a cylindrical extension (41) separating the two surfaces (6, 35) of the annular piston (5) or of the annular pistons (5; 47) from each other.

4. Device of at least one of the claims 1 to 3, **characterized in that** the annular piston (5) includes an axially directed extension (38) housing a preload spring (39).

5. Device of at least one of the claims 1 to 4, **characterized in that** the first hydraulically operated surface (6) is located on a smaller diameter than the second pneumatically operated surface (35).

6. Device of at least one of the claims 1 to 5, **characterized in that** the control valve (15) includes a double valve body (17) being supported on a spring and a stepped control piston (14).

7. Device of at least one of the claims 1 to 6, **characterized in that** the control piston (14) comprises a number of grooves (22) being located on different diameters to vary the transmission ratio by insertion of seals (19; 21) as wanted.

8. Device of at least one of the claims 1 to 7, **characterized in that** the control piston (14) has a hollow extension (23) to actuate the double valve body (17).

9. Device of at least one of the claims 1 to 8, **characterized in that** the annular piston (5) or the additional annular piston (47) is sealed by a membrane (43) clamped in a rim of the housing (2).

10. Device of at least one of the claims 1 to 9, **characterized in that** the bearing (40) for disengagement of the friction clutch is directly supported on the annular piston (5; 47).

## Revendications

1. Dispositif pour l'enclenchement ou le désenclenchement optionnel d'un embrayage à friction pour véhicules automobiles, comprenant un boîtier (2) percé pour le passage d'un arbre, dans lequel est monté de façon coulissante et étanche, un piston annulaire (5) alimenté hydrauliquement et comprenant une première surface active (6), qui actionne un palier de désenclenchement (40) de l'embrayage à friction, une seconde surface active (35) étant prévue sur le piston annulaire (5) ou sur un piston annulaire (47) séparé, laquelle surface peut être alimentée avec une pression auxiliaire ou une servopression pneumatique, et une vanne de commande (15) pour l'alimentation de la seconde surface active (35) avec la pression auxiliaire ou la servopression étant disposée dans le boîtier (2) du dispositif (1), laquelle vanne est reliée par une conduite de commande (11) à la première surface active (6) du piston annulaire (5) alimenté au plan hydraulique.

2. Dispositif selon la revendication 1, **caractérisé en ce qu'**également la seconde surface active (35) est conçue comme surface annulaire circulaire.

3. Dispositif selon les revendications 1 et 2, **caractérisé en ce que** le boîtier (2) présente un prolongement annulaire (41) cylindrique, qui sépare les deux surfaces actives (6, 35) sur le piston annulaire ou les pistons annulaires (5 ; 47) les unes des autres.

4. Dispositif selon l'une quelconque des revendications 1 à 3, **caractérisé en ce que** le piston annulaire (5) présente un évidement (38) s'étendant axialement, dans lequel est disposé un ressort de précontrainte (39).

5. Dispositif selon au moins l'une quelconque des revendications 1 à 4, **caractérisé en ce que** la première surface active (6) alimentée hydrauliquement est disposée sur un rayon plus petit que celui de la seconde surface active (35) alimentée hydrauliquement.

6. Dispositif selon au moins l'une quelconque des revendications 1 à 5, **caractérisé en ce que** l'élément de commande (15) présente un corps de vanne double (17) suspendu de façon élastique et un piston de commande (14) étagé.

7. Dispositif selon la revendication 6, **caractérisé en ce que** le piston de commande (14) présente pour la variation du rapport de transmission plusieurs rainures (22) disposées sur différents diamètres pour l'agencement optionnel de joints (19 ; 21).

8. Dispositif selon la revendication 6 ou 7, **caractérisé en ce que** le piston de commande (14) présente un prolongement (23) creux pour l'actionnement du corps de vanne double (17).

9. Dispositif selon au moins l'une quelconque des revendications 1 à 8, **caractérisé en ce que** le piston annulaire (5) ou le piston annulaire (47) séparé est guidé de façon étanche au moyen d'une membrane (43) serrée côté bordure dans le boîtier (2).

10. Dispositif selon au moins l'une quelconque des revendications 1 à 9, **caractérisé en ce que** le palier de désenclenchement (40) est soutenu directement sur le piston annulaire (5 ; 47).
